# FASCICULE DE BREVET EUROPEEN

(11) **EP 1 105 722 B1**
(45) Date de publication et mention de la délivrance du brevet: **23.07.2003**
(21) Numéro de dépôt: 99940231.6
(22) Date de dépôt: 19.08.1999
(51) Int. Cl.: G01N 30/20

(54) **PROCEDE ET DISPOSITIF POUR PRELEVER DES MICRO-ECHANTILLONS D'UN FLUIDE SOUS PRESSION CONTENU DANS UN CONTAINER**
VERFAHREN UND VORRICHTUNG ZUR ENTNAHME VON MIKROPROBEN EINER UNTER DRUCK STEHENDEN FLÜSSIGKEIT AUS EINEM CONTAINER
METHOD AND DEVICE FOR EXTRACTING MICRO-SAMPLES OF PRESSURISED FLUID CONTAINED IN A CONTAINER

(30) Priorité: 21.08.1998 FR 9810708
(43) Date de publication de la demande: 13.06.2001
(73) Titulaire: Armines, 75272 Paris Cedex 06 (FR)
(72) Inventeur: RICHON, Dominique, F-77210 Samoreau (FR)
(74) Mandataire: Vidon, Patrice
(86) Numéro de dépôt international: FR9902015
(87) Numéro de publication internationale: WO00011462

(56) Documents cités:
- US-A- 3 321 977
- US-A- 3 492 946
- US-A- 5 178 767
- US-A- 5 224 510
- US-A- 5 404 765

## Description

La présente invention concerne un procédé et un dispositif pour prélever des micro-échantillons d'un fluide sous pression contenu dans un container. Ces micro-échantillons sont prélevés en vue d'être analysés, notamment par chromatographie.

On connaît des procédés et des dispositifs de prélèvement d'un fluide sous haute pression. La demanderesse a décrit dans le brevet FR-A-2 476 311 et dans la demande de brevet FR 85 05999 un dispositif de prélèvement d'échantillons d'un produit gazeux ou liquide sous pression comprenant une première canalisation de traversée pour le produit à échantillonner et une seconde canalisation de traversée pour le vecteur gazeux ou liquide. Le dispositif comprend également un passage de communication entre ces deux canalisations et un organe permettant de contrôler la fermeture et l'ouverture transitoire du passage de communication. Cette ouverture a lieu uniquement durant la période de prélèvement de l'échantillon. L'organe d'obturation coulisse dans un logement cylindrique. L'étanchéité est assurée par un joint annulaire. Les performances de tels dispositifs sont remarquables. Cependant celles-ci pourraient encore être grandement améliorées vers les très hautes pressions et les très hautes températures s'il était possible de concevoir un dispositif ne comportant pas de joint d'étanchéité.

Le procédé et le dispositif selon la présente invention ont pour objet d'apporter une solution à ce problème technique.

Le procédé selon l'invention comprend les étapes :
- de mettre en communication le container contenant le fluide sous pression à échantillonner avec un circuit de transfert parcouru par un fluide d'entraînement, à travers un orifice capillaire situé à l'extrémité d'un tube capillaire,
- d'ouvrir et de fermer ledit orifice capillaire au moyen d'un piston obturateur mobile,
- d'actionner ledit piston obturateur mobile en déformant une chambre extensible contenant de manière étanche ledit piston obturateur mobile.

L'étanchéité autour du piston obturateur mobile est ainsi assurée sans qu'il soit nécessaire de prévoir un joint d'étanchéité coulissant.

De préférence le procédé selon l'invention comprend en outre l'étape d'équilibrer la pression à l'intérieur d'une chambre contenant la chambre extensible de telle sorte qu'elle soit supérieure d'au moins deux bars par rapport à celle du fluide contenu dans la chambre extensible. La différence de pression entre les deux chambres contribue à actionner le piston obturateur mobile.

De préférence également, le procédé selon l'invention comprend en outre l'étape d'actionner ledit piston obturateur mobile en déformant la chambre extensible au moyen d'un vérin, notamment pneumatique. Ladite chambre extensible contient de manière étanche ledit piston obturateur mobile.

De préférence également, le procédé selon l'invention comprend en outre l'étape de contrôler la durée entre deux déplacements consécutifs en sens inverse du piston obturateur mobile. Il est ainsi possible de contrôler la quantité prélevée de fluide sous pression.

De préférence également, le procédé selon l'invention comprend en outre l'étape de contrôler, notamment au moyen d'une vis différentielle, la course du déplacement du piston obturateur mobile à l'ouverture. Il est ainsi possible de contrôler la quantité prélevée de fluide sous pression.

De préférence également, le procédé selon l'invention comprend en outre l'étape de contrôler la quantité prélevée de fluide sous pression,
- en prolongeant l'extrémité du piston obturateur mobile par une aiguille effilée qui pénètre dans ledit tube capillaire par ledit orifice capillaire, et/ou
- en engageant dans ledit tube capillaire un fil.

Il en résulte que les pertes de charge dans le tube capillaire réduisent le débit du fluide sous pression.

De préférence également, le procédé selon l'invention comprend en outre l'étape de chauffer la zone située à proximité de l'orifice capillaire.

Le fluide sous pression à l'état liquide est ainsi vaporisé au moment du prélèvement.

La présente invention concerne aussi un dispositif pour prélever des micro-échantillons d'un fluide sous pression, en vue d'analyser les échantillons prélevés, notamment par chromatographie. Le dispositif comprend un container contenant le fluide sous pression. Ce container comporte un orifice capillaire à l'extrémité d'un tube capillaire. Le dispositif comprend aussi un circuit de transfert parcouru par un fluide d'entraînement, communicant avec ledit orifice capillaire du container. Un piston obturateur mobile est susceptible d'occuper deux positions,
- l'une de fermeture dudit orifice capillaire,
- l'autre d'ouverture dudit orifice capillaire.

Ledit piston obturateur mobile est contenu de manière étanche dans une chambre extensible déformable. Un moyen d'actionnement, notamment un vérin pneumatique, permet d'actionner ledit piston obturateur mobile en déformant la chambre extensible. L'étanchéité autour du piston obturateur mobile est ainsi assurée sans qu'il soit nécessaire de prévoir un joint d'étanchéité coulissant.

De préférence le dispositif selon l'invention est tel que la chambre extensible est située à l'intérieur d'une chambre contenant un fluide dont la pression est supérieure d'au moins deux bars par rapport à celle du fluide contenu dans la chambre extensible. La différence de pression entre les deux chambres contribue à actionner le piston obturateur mobile.

De préférence le dispositif selon l'invention comprend des moyens de contrôle pour contrôler la durée entre deux déplacements consécutifs en sens inverse du piston obturateur mobile. Il est ainsi possible de contrôler la quantité prélevée de fluide sous pression.

De préférence le dispositif selon l'invention comprend des moyens de contrôle, notamment une vis différentielle, pour contrôler la course du déplacement du piston obturateur mobile à l'ouverture. Il est ainsi possible de contrôler la quantité de fluide sous pression prélevée.

De préférence le dispositif selon l'invention est tel que :
- l'extrémité du piston obturateur mobile est prolongée par une aiguille effilée qui pénètre dans ledit tube capillaire par ledit orifice capillaire,
et/ou tel que :
- ledit tube capillaire comporte un fil.

Il en résulte que les pertes de charge dans le tube capillaire réduisent le débit du fluide sous pression et qu'il est ainsi possible de limiter la quantité de fluide prélevée.

Avantageusement le dispositif selon l'invention est tel que la chambre extensible est composée d'au moins un soufflet.

De préférence le dispositif selon l'invention comprend en outre des moyens de chauffage, notamment de cartouches chauffantes, de la zone située à proximité de l'orifice capillaire.

Ainsi le fluide sous pression, à l'état liquide, est vaporisé au moment du prélèvement

D'autres caractéristiques et avantages de l'invention apparaîtront à la lecture de la description de variantes de réalisation de l'invention, données à titre d'exemples indicatifs et non limitatifs, et de :
- la figure 1 qui représente une vue en coupe longitudinale d'une variante de réalisation du dispositif selon l'invention,
- la figure 2 qui représente une vue éclatée de la variante de réalisation de la figure 1,
- la figure 2a qui représente une vue de détail de l'aiguille effilée pénétrant dans le capillaire,
- la figure 3 qui représente une vue en coupe longitudinale d'une deuxième variante de réalisation du dispositif selon l'invention comportant des cartouches chauffantes permettant de vaporiser le fluide lors du prélèvement,
- la figure 4 qui représente une vue en coupe transversale de la variante de la figure 3, au droit de l'emplacement des cartouches chauffantes.

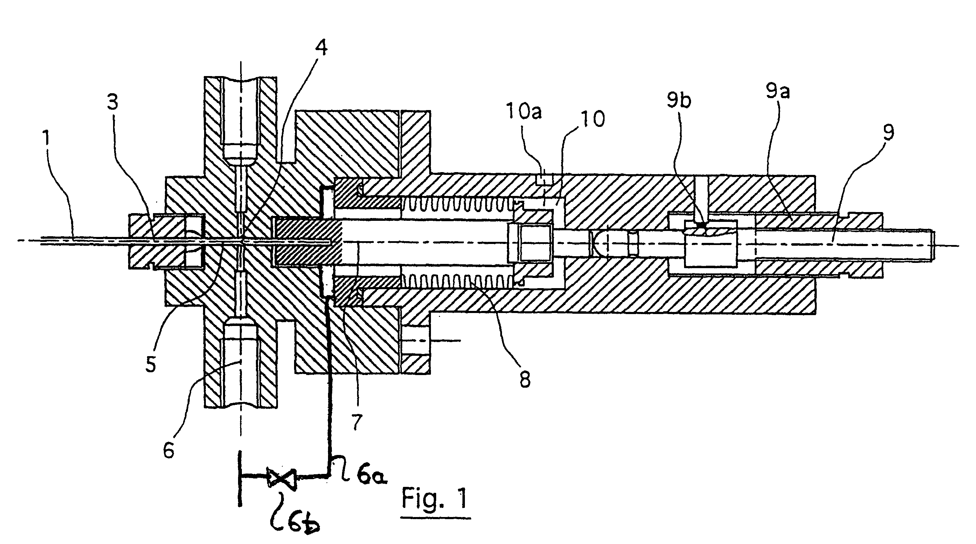

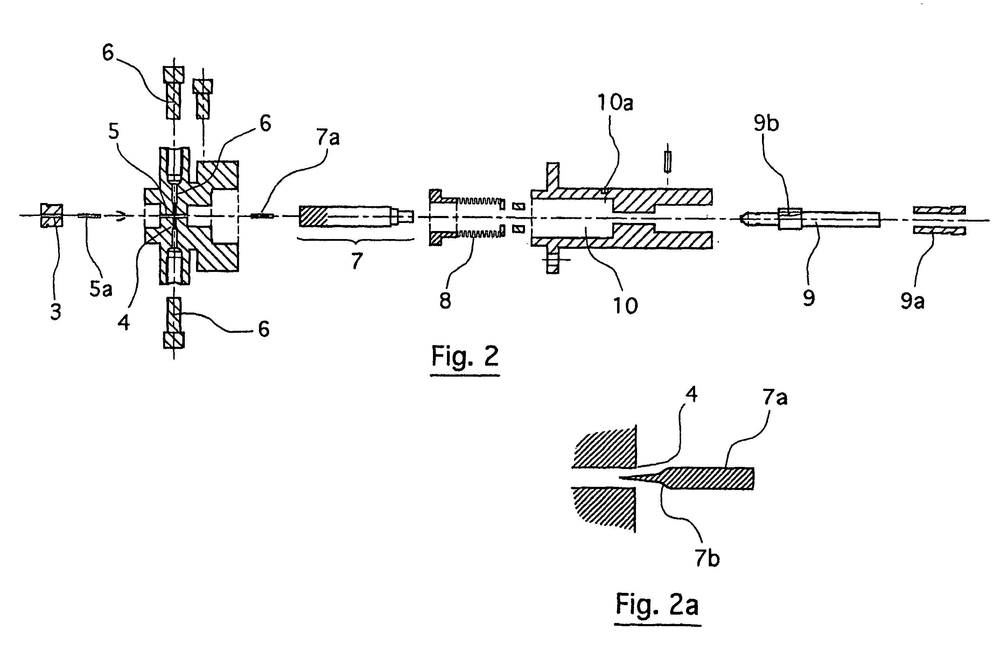

On va maintenant décrire la variante de réalisation du dispositif selon l'invention représenté sur les figures 1 et 2. Le dispositif pour prélever des micro-échantillons d'un fluide sous pression, en vue d'analyser les échantillons prélevés, notamment par chromatographie comprend un container (non visible sur la figure 1) situé à l'emplacement repéré 1. Le container contenant le fluide sous pression est relié par une tubulure capillaire 3, 5 à un orifice capillaire 4 situé à l'extrémité de la tubulure capillaire 5. Un circuit de transfert 6, parcouru par un fluide d'entraînement, communique avec ledit orifice capillaire 4 et par conséquent avec le container. Un piston obturateur mobile 7 est susceptible d'occuper deux positions :
- l'une de fermeture dudit orifice capillaire 4,
- l'autre d'ouverture dudit orifice capillaire 4.

Le piston obturateur mobile 7 est contenu de manière étanche dans une chambre extensible 8 déformable constitué, dans le cas de la variante représentée, par un soufflet. L'étanchéité autour du piston obturateur mobile est ainsi assurée sans qu'il soit nécessaire d'utiliser un joint d'étanchéité coulissant autour du piston obturateur.

Afin d'équilibrer la pression dans la chambre extensible 8, une dérivation 6a du circuit de transfert 6 parcourue par le fluide d'entraînement alimente la chambre extensible 8. Une vanne 6b permet de fermer ou de mettre en service cette dérivation. Ce circuit de dérivation a été représenté de manière schématique sur la figure 1.

Un moyen d'actionnement, notamment un vérin constitué par une chambre étanche 10 contenant le soufflet 8 permet d'actionner ledit piston obturateur mobile 7. Ce vérin fonctionne comme il est décrit ci-après. L'injection d'un fluide sous pression par l'orifice 10a dans la chambre 10 déforme la chambre extensible 8, en comprimant le soufflet. La compression du soufflet entraîne le déplacement du piston obturateur 7 dans le sens de la fermeture de l'orifice capillaire 4. La pression dans la chambre 10 est supérieure d'au moins deux bars par rapport à celle du fluide contenu dans la chambre extensible 8. La différence de pression entre les deux chambres permet d'actionner le piston obturateur mobile 7.

Le fonctionnement du vérin est commandé par des électrovannes dont le cycle d'ouverture et de fermeture est contrôlé par une minuterie. Il est ainsi possible de faire varier la durée entre deux déplacements consécutifs en sens inverse du piston obturateur mobile 7. Plus la durée pendant laquelle l'obturateur 7 est en position d'ouverture est longue, plus la quantité de fluide prélevé est grande.

Des moyens de contrôle, notamment une vis différentielle (9, 9a, 9b), permettent de contrôler la course du déplacement du piston obturateur mobile 7 à l'ouverture. En avançant vers la gauche la vis butée 9, on raccourcit la course de l'obturateur 7 et on diminue l'ouverture de l'orifice capillaire 4. Il est également ainsi possible de contrôler la quantité de fluide sous pression prélevée.

Dans le cas de la variante de réalisation représentée sur les figures 1 et 2, l'extrémité du piston obturateur mobile 7 est prolongée par une aiguille effilée 7a qui pénètre dans le tube capillaire 5 par l'orifice capillaire 4. La figure 2a représente une vue de détail de l'aiguille effilée 7a pénétrant dans l'orifice capillaire 4. En position de fermeture, l'étanchéité est assurée par la partie conique 7b qui prend appui contre le bord de l'orifice capillaire 4. Egalement dans le cas de cette variante de réalisation, le tube capillaire 5 comporte un fil 5a. Les pertes de charge dans le tube capillaire 5 réduisent le débit du fluide sous pression et il est ainsi possible de limiter la quantité de fluide prélevée.

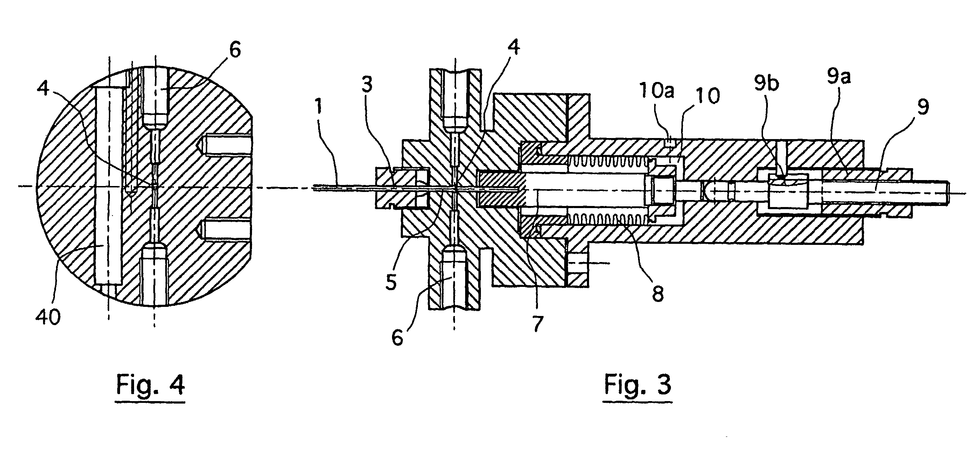

On va maintenant décrire la variante de réalisation du dispositif selon l'invention représenté sur les figures 3 et 4. On reconnaît sur les figures 3 et 4 les organes décrits en se référant aux figures 1 et 2, ils portent les mêmes références. Dans le cas de la variante de réalisation des figures 3 et 4, le dispositif comprend en outre des moyens de chauffage, notamment de cartouches chauffantes électriques, dans la zone 40 située à proximité de l'orifice capillaire 4. Ainsi, le fluide sous pression à l'état liquide est vaporisé au moment du prélèvement.

## Revendications

1. Procédé pour prélever des micro-échantillons d'un fluide sous pression contenu dans un container (1), en vue d'analyser les échantillons prélevés, notamment par chromatographie ; ledit procédé comprenant les étapes :
- de mettre en communication un container (1) contenant le fluide sous pression à échantillonner avec un circuit de transfert (6) parcouru par un fluide d'entraînement, à travers un orifice capillaire (4) situé à l'extrémité d'un tube capillaire (5),
- d'ouvrir et de fermer ledit orifice capillaire (4) au moyen d'un piston obturateur mobile (7),
- d'actionner ledit piston obturateur mobile (7) en déformant une chambre extensible (8) contenant de manière étanche ledit piston obturateur mobile (7),
de sorte que l'étanchéité autour du piston obturateur mobile est assurée sans qu'il soit nécessaire de prévoir un joint d'étanchéité coulissant.

2. Procédé selon la revendication 1 comprenant en outre l'étape :
- d'équilibrer la pression à l'intérieur d'une chambre (10) contenant la chambre extensible (8) de telle sorte qu'elle soit supérieure d'au moins deux bars par rapport à celle du fluide contenu dans la chambre extensible (8).

3. Procédé selon l'une quelconque des revendications 1 ou 2 comprenant en outre l'étape :
- d'actionner ledit piston obturateur mobile (7) en déformant une chambre extensible (8) contenant de manière étanche ledit piston obturateur mobile (7), au moyen d'un vérin (8, 10), notamment pneumatique.

4. Procédé selon l'une quelconque des revendications 1 à 3 comprenant en outre l'étape :
- de contrôler la durée entre deux déplacements consécutifs en sens inverse du piston obturateur mobile (7).

5. Procédé selon l'une quelconque des revendications 1 à 4 comprenant en outre l'étape :
- de contrôler, notamment au moyen d'une vis différentielle (9, 9a, 9b), la course du déplacement du piston obturateur mobile (7) à l'ouverture.

6. Procédé selon l'une quelconque des revendications 1 à 5 comprenant en outre l'étape :
- de contrôler la quantité prélevée de fluide sous pression,
* en prolongeant l'extrémité du piston obturateur mobile par une aiguille effilée (7a) qui pénètre dans ledit tube capillaire (5) par ledit orifice capillaire (4), et/ou
* en engageant dans ledit tube capillaire (5) un fil (5a).

7. Procédé selon l'une quelconque des revendications 1 à 6 comprenant en outre l'étape :
- de chauffer la zone (40) située à proximité de l'orifice capillaire (4).

8. Dispositif pour prélever des micro-échantillons d'un fluide sous pression, en vue d'analyser les échantillons prélevés, notamment par chromatographie ; ledit dispositif comprend :
- un container (1) contenant le fluide sous pression comportant un orifice capillaire (4) à l'extrémité d'un tube capillaire (5),
- un circuit de transfert (6) parcouru par un fluide d'entraînement, communicant avec ledit orifice capillaire (4) du container (1),
- un piston obturateur mobile (7) susceptible d'occuper deux positions,
* l'une de fermeture dudit orifice capillaire (4),
* l'autre d'ouverture dudit orifice capillaire (4),
ledit piston obturateur mobile (7) étant contenu de manière étanche dans une chambre extensible (8) déformable,
- un moyen d'actionnement pour actionner ledit piston obturateur mobile (7) en détonnant la chambre extensible (8),
de sorte que l'étanchéité autour du piston obturateur mobile est assurée sans qu'il soit nécessaire de prévoir un joint d'étanchéité coulissant.

9. Dispositif selon la revendication 8 tel que :
- la chambre extensible (8) est située à l'intérieur d'une chambre (10) contenant un fluide dont la pression est supérieure d'au moins deux bars par rapport à celle du fluide contenu dans la chambre extensible.

10. Dispositif selon l'une quelconque des revendications 8 ou 9 tel que:
- le moyen d'actionnement pour actionner ledit piston obturateur mobile (7), en déformant la chambre extensible (8), est un vérin (8, 10) notamment un vérin pneumatique.

11. Dispositif selon l'une quelconque des revendications 8 à 10 tel qu'il comprend
- des moyens de contrôle pour contrôler la durée entre deux déplacements consécutifs en sens inverse du piston obturateur mobile (7).

12. Dispositif selon l'une quelconque des revendications 8 à 11 tel qu'il comprend
- des moyens de contrôle, notamment une vis différentielle (9, 9a, 9b), pour contrôler la course du déplacement du piston obturateur mobile (7) à l'ouverture.

13. Dispositif selon l'une quelconque des revendications 8 à 12 tel que :
* l'extrémité du piston obturateur mobile (7) est prolongée par une aiguille effilée (7a) qui pénètre dans ledit tube capillaire (5) par ledit orifice capillaire (4), et/ou tel que :
* ledit tube capillaire (5) comporte un fil (5a).

14. Dispositif selon l'une quelconque des revendications 8 à 13 tel que
- la chambre extensible (8) est composée d'au moins un soufflet.

15. Dispositif selon l'une quelconque des revendications 8 à 14 comprenant en outre
- des moyens de chauffage, notamment de cartouches chauffantes, de la zone (40) située à proximité de l'orifice capillaire (4),

## Patentansprüche

1. Verfahren zum Entnehmen von Mikroproben einer unter Druck stehenden, in einem Behälter (1) enthaltenen Flüssigkeit, zum Zweck der Analyse dieser entnommenen Proben, insbesondere durch Chromatographie, wobei das Verfahren die folgenden Schritte umfasst:
- Verbinden eines Behälters (1), der die unter Druck befindliche Flüssigkeit, von der eine Probe entnommen werden soll, mit einem Transferkreislauf (6), durch den eine Mitnahmeflüssigkeit fließt, über eine am Ende einer Kapillarröhre (5) befindlichen Kapillaröffnung (4),
- Öffnen und Schließen dieser Kapillaröffnung (4) mit Hilfe eines beweglichen Schließkolbens (7),
- Betätigen dieses Schließkolbens (7) durch Verformung einer Dehnkammer (8), welche den Schließkolben (7) derart dicht umfasst,
dass die Abdichtung um den beweglichen Schließkolben ohne gleitende Dichtung gesichert ist.

2. Verfahren nach Anspruch 1, das darüber hinaus den folgenden Schritt umfasst:
- den Druck innerhalb einer Kammer (10), welche die Dehnkammer (8) enthält, derart ins Gleichgewicht bringen, dass er mindestens um zwei Bar höher liegt als der Druck der in der Dehnkammer (8) enthaltenen Flüssigkeit.

3. Verfahren nach einem der Ansprüche 1 oder 2, das darüber hinaus den folgenden Schritt umfasst:
- Betätigen des beweglichen Schließkolbens (7) durch Verformung einer Dehnkammer (8), welche den beweglichen Schließkolben (7) dicht umfasst, mittels eines Druckzylinders (8, 10), wobei es sich insbesondere um einen pneumatischen Druckzylinder handelt.

4. Verfahren nach einem der Ansprüche 1 bis 3, das darüber hinaus den folgenden Schritt umfasst:
- Steuern der Zeit zwischen zwei aufeinanderfolgende gegenläufige Bewegungen des beweglichen Schließkolbens (7).

5. Verfahren nach einem der Ansprüche 1 bis 4, das darüber hinaus den folgenden Schritt umfasst:
- Steuern des Laufweges des beweglichen Schließkolbens (7) beim Öffnen, insbesondere mit Hilfe einer Differentialschraube (9, 9a, 9b).

6. Verfahren nach einem der Ansprüche 1 bis 5, das darüber hinaus den folgenden Schritt umfasst:
- Steuern der Menge der entnommenen, unter Druck stehenden Flüssigkeit,
* durch Verlängern des Endes des beweglichen Schließkolbens durch eine spitze Nadel (7a), die in die Kapillarröhre (5) durch die Kapillaröffnung (4) eindringt und/oder
* durch Einführen eines Fadens (5a) in die Kapillarröhre (5).

7. Verfahren nach einem der Ansprüche 1 bis 6, das darüber hinaus den folgenden Schritt umfasst:
- Heizen des in der Nähe der Kapillaröffnung (4) befindlichen Bereiches (40).

8. Vorrichtung zum Entnehmen einer Mikroprobe einer unter Druck stehenden Flüssigkeit, um diese zu analysieren, insbesondere durch Chromatographie, wobei die Vorrichtung folgendes umfasst:
- einen Behälter (1), der die unter Druck stehende Flüssigkeit umfasst und eine Kapillaröffnung (4) am Ende einer Kapillarröhre (5) aufweist,
- einen mit der Kapillaröffnung (4) des Behälters (1) verbundenen Transferkreislauf (6), durch den eine Mitnahmeflüssigkeit fließt,
- einen beweglichen Schließkolben (7), der zwei Stellungen einnehmen kann:
* eine Verschlussstellung der Kapillaröffnung (4),
* eine Öffnungsstellung der Kapillaröffnung (4),
wobei der bewegliche Schließkolben (7) dicht in einer verformbaren Dehnkammer (8) enthalten ist,
- ein Betätigungsmittel zum Betätigen des beweglichen Schließkolbens (7) durch Verformung der Dehnkammer (8),
so dass die Abdichtung um den beweglichen Schließkolben ohne gleitende Dichtung gesichert ist.

9. Vorrichtung nach Anspruch 8, **dadurch gekennzeichnet, dass**:
- die Dehnkammer (8) innerhalb einer Kammer (10) liegt, welche die Flüssigkeit enthält, deren Druck mindestens zwei Bar höher als der Druck der in der Dehnkammer enthaltenen Flüssigkeit liegt.

10. Verfahren nach einem der Ansprüche 8 oder 9, **dadurch gekennzeichnet, dass**:
- das Betätigungsmittel des beweglichen Schließkolbens (7) durch Verformung der Dehnkammer (8) ein Druckzylinder (8, 10) und insbesondere ein pneumatischer Druckzylinder ist.

11. Verfahren nach einem der Ansprüche 8 bis 10, **dadurch gekennzeichnet, dass** es folgendes umfasst:
- Mittel zum Steuern der Zeit zwischen zwei aufeinanderfolgende gegenläufige Bewegungen des beweglichen Schließkolbens (7).

12. Verfahren nach einem der Ansprüche 8 bis 11, **dadurch gekennzeichnet, dass** es folgendes umfasst:
- Steuermittel, insbesondere eine Differentialschraube (9, 9a, 9b) zum Steuern des Laufweges des beweglichen Schließkolbens (7) beim Öffnen.

13. Verfahren nach einem der Ansprüche 8 bis 12, durch folgendes gekennzeichnet:
* dass das Ende des beweglichen Schließkolbens (7) durch eine spitze Nadel (7a) verlängert wird, welche in die Kapillarröhre (5) durch die Kapillaröffnung (4) eindringt und/oder,
* dass die Kapillarröhre (5) einen Faden (5a) umfasst.

14. Verfahren nach einem der Ansprüche 8 bis 13, durch folgendes gekennzeichnet:
- die Dehnkammer (8) besteht aus mindestens einem Faltenbalg gebildet.

15. Verfahren nach einem der Ansprüche 8 bis 14, welches darüber hinaus folgendes umfasst:
- Heizmittel und insbesondere Heizpatronen für den in der Nähe der Kapillaröffnung (4) befindlichen Bereich (40).

## Claims

1. Method for collection of micro-samples of a pressurised fluid contained in a container (1), in order to analyse the samples collected, in particular by chromatography; the said method comprising the steps of:
- putting a container (1) which contains the pressurised fluid to be sampled into communication with a transfer circuit (6) through which an entrainment fluid passes, via a capillary aperture (4) which is situated at the end of a capillary tube (5);
- opening and closing the said capillary aperture (4) by means of a mobile shutter piston (7); and
- activating the said mobile shutter (7) by deforming a extensible chamber (8) which contains the said mobile shutter piston (7) in a sealed manner,
such that the sealing around the mobile shutter piston is assured without needing to provide a sliding seal.

2. Method according to claim 1, additionally comprising the step of:
- balancing the pressure inside a chamber (10) which contains the extensible chamber (8), such that it is at least two bars greater than that of the fluid contained in the extensible chamber (8).

3. Method according to claim 1 or claim 2, additionally comprising the step of:
- activating the said mobile shutter piston (7) by deforming an extensible chamber (8) which contains the said mobile shutter piston (7) in a sealed manner, by means of a jack (8, 10), and in particular a pneumatic jack.

4. Method according to any one of claims 1 to 3, additionally comprising the step of:
- controlling the duration between two consecutive displacements of the mobile shutter piston (7) in inverse directions.

5. Method according to any one of claims 1 to 4, additionally comprising the step of:
- controlling the course of displacement of the mobile shutter piston (7) during opening, in particular by means of a differential screw (9, 9a, 9b).

6. Method according to any one of claims 1 to 5, additionally comprising the step of:
- controlling the quantity of pressurised fluid collected:
* by extending the end of the mobile shutter piston by means of a tapered needle (7a) which penetrates into the said capillary tube (5) via the said capillary aperture (4), and/or
* by engaging a wire (5a) in the said capillary tube (5).

7. Method according to any one of claims 1 to 6, additionally comprising the step of:
- heating the area (40) which is situated in the vicinity of the capillary aperture (5).

8. Device for collection of micro-samples of a pressurised fluid in order to analyse the samples collected, in particular by chromatography; the said device comprises:
- a container (1) which contains the pressurised fluid comprising a capillary aperture (4) at the end of a capillary tube (5);
- a transfer circuit (6) through which an entrainment fluid passes, which circuit communicates with the said capillary aperture (4) of the container (1);
- a mobile shutter piston (7) which can occupy two positions:
* one of closure of the said capillary aperture (4);
* the other of opening of the said capillary aperture (4);
the said mobile shutter piston (7) being contained in a sealed manner in a deformable extensible chamber (8); and
- a means for activation in order to activate the said mobile shutter piston (7) by deforming the extensible chamber (8);
such that the sealing around the mobile shutter piston is assured without needing to provide a sliding seal.

9. Device according to claim 8 such that:
- the extensible chamber (8) is situated inside a chamber (10) which contains a fluid, the pressure of which is at least two bars greater than that of the fluid contained in the extensible chamber.

10. Device according to claim 8 or claim 9 such that:
- the means for activation in order to activate the said mobile shutter piston (7) by deforming the extensible chamber (8), is a jack (8, 10), and in particular a pneumatic jack.

11. Device according to any one of claims 8 to 10, such that it comprises:
- control means to control the duration between two consecutive displacements of the mobile shutter piston (7) in inverse directions.

12. Device according to any one of claims 8 to 11, such that it comprises:
- control means, and in particular a differential screw (9, 9a, 9b) to control the course of displacement of the mobile shutter piston (7) during opening.

13. Device according to any one of claims 8 to 12, such that:
* the end of the mobile shutter piston (7) is extended by means of a tapered needle (7a) which penetrates into the said capillary tube (5) via the said capillary aperture (4), and/or such that:
* the said capillary tube (5) comprises a wire (5a).

14. Device according to any one of claims 8 to 13, such that:
- the extensible chamber (8) consists of at least one set of bellows.

15. Device according to any one of claims 8 to 14, additionally comprising:
- means, and in particular heating cartridges, for heating the area (40) situated in the vicinity of the capillary aperture (4).
